# EUROPÄISCHE PATENTANMELDUNG

(11) **EP 4 641 138 A1**
(43) Veröffentlichungstag der Anmeldung: **29.10.2025**
(21) Anmeldenummer: 24171882.4
(22) Anmeldetag: 23.04.2024
(51) Int. Cl.: G01C 21/20, H04W 4/33

(54) **GENERIERUNG EINES NAVIGATIONSGRAPHEN ZUR NAVIGATION IN EINEM INNENRAUM**

(71) Anmelder: Siemens Schweiz AG, 8047 Zürich (CH)
(72) Erfinder: Die Erfindernennung liegt noch nicht vor
(74) Vertreter: Siemens Patent Attorneys

(57) **Zusammenfassung**

Die Erfindung betrifft eine Vorrichtung und ein computerimplementiertes Verfahren zur Generierung eines Navigationsgraphen zur Navigation in einem Innenraum. Die Vorrichtung umfasst:
• eine erste Schnittstelle, die derart eingerichtet ist, ein BIM-Modell für den Innenraum einzulesen,
• ein Selektionsmodul, das derart eingerichtet ist, BIM-Elemente aus dem BIM-Modell zu selektieren, wobei die selektierten BIM-Elemente eine hinreichend gleichmäßige, räumliche Verteilung und/oder mindestens eine vorgegebene Varianz in Elementtypen aufweisen,
• ein Extraktionsmodul, das derart eingerichtet ist, absolute Positionsinformationen für die selektierten BIM-Elemente aus dem BIM-Modell zu extrahieren,
• ein Zuordnungsmodul, das derart eingerichtet ist, jedes selektierte BIM-Element jeweils einem Graphknoten zuzuordnen,
• einen Generator, der derart eingerichtet ist, einen ungerichteten Navigationsgraphen aus den Graphknoten zu generieren, wobei eine relative Position zwischen zwei Graphknoten aus jeweiligen absoluten Positionsinformationen der selektieren BIM-Elemente abgeleitet wird,
und
• ein Ausgabemodul, das derart eingerichtet ist, den Navigationsgraphen zur Navigation im Innenraum bereitzustellen.

## Beschreibung

Die Erfindung betrifft eine Vorrichtung und ein computerimplementiertes Verfahren zur Generierung eines Navigationsgraphen auf Basis eines BIM-Modells eines Innenraums ("Building Information Modelling", kurz: BIM), sowie ein Computerprogrammprodukt, und ein System zur Navigation umfassend die Vorrichtung.

Visuelle Navigationsgraphen bieten eine Möglichkeit, die Darstellung von Innenräumen zu vereinfachen und zu standardisieren. Ein Navigationsgraph umfasst Graphknoten/Knoten, die wichtige Punkte und/oder Gegenstände im Raum darstellen, wie z. B. Räume, Treppen oder Schnittpunkte. Weiter umfasst der Navigationsgraph Graphkanten/Kanten, die die Knoten verbinden und die Pfade zwischen den Knoten definieren. Ein solcher Navigationsgraph kann zur Navigation im Raum von einem Nutzer oder einem autonomen Fahrzeug, z.B. ein Automated Guided Vehicle (AGV), genutzt werden, um beispielsweise einen optimalen Pfad zu einem Zielort zu bestimmen.

Die Erstellung visueller Navigationsgraphen basiert in der Regel auf der Verwendung von optischen Scannern, wie z.B. 3D-Kameras oder Lidar-Scannern, zur Erfassung von Punkten in einem Innenraum. Aus den derart erfassten Punkten kann ein Navigationsgraph erstellt werden. Eine solche Generierung von Navigationsgraphen ist allerdings zeitaufwendig und kostenintensiv.

Es ist daher eine Aufgabe der vorliegenden Erfindung, eine Erstellung eines Navigationsgraphen für einen Innenraum zu vereinfachen.

Die Aufgabe wird durch die in den unabhängigen Ansprüchen beschriebenen Maßnahmen gelöst. In den abhängigen Ansprüchen sind vorteilhafte Weiterbildungen der Erfindung dargestellt.

Gemäß einem ersten Aspekt betrifft die Erfindung eine Vorrichtung zur Generierung eines Navigationsgraphen zur Navigation in einem Innenraum, umfassend:
- eine erste Schnittstelle, die derart eingerichtet ist, ein BIM-Modell für den Innenraum einzulesen,
- ein Selektionsmodul, das derart eingerichtet ist, BIM-Elemente aus dem BIM-Modell zu selektieren, wobei die selektierten BIM-Elemente eine hinreichend gleichmäßige, räumliche Verteilung und/oder mindestens eine vorgegebene Varianz in Elementtypen aufweisen,
- ein Extraktionsmodul, das derart eingerichtet ist, absolute Positionsinformationen für die selektierten BIM-Elemente aus dem BIM-Modell zu extrahieren,
- ein Zuordnungsmodul, das derart eingerichtet ist, jedes selektierte BIM-Element jeweils einem Graphknoten zuzuordnen,
- einen Generator, der derart eingerichtet ist, einen ungerichteten Navigationsgraphen aus den Graphknoten zu generieren, wobei eine relative Position zwischen zwei Graphknoten aus jeweiligen absoluten Positionsinformationen der selektieren BIM-Elemente abgeleitet wird,
   und
- ein Ausgabemodul, das derart eingerichtet ist, den Navigationsgraphen zur Navigation im Innenraum bereitzustellen.

Es ist ein Vorteil der vorliegenden Erfindung, dass ein Navigationsgraph für eine Navigation eines Nutzers oder eines autonomen Fahrzeugs in einem Innenraum aus einem für den Innenraum bereitgestellten BIM-Modell ("Building Information Modelling", kurz: BIM) des Innenraums erstellt werden kann. Es ist somit kein aufwendiger Scan des Innenraums mehr für die Erstellung des Navigationsgraphen erforderlich. Jede für die Navigation erforderliche Information kann aus dem BIM-Modell extrahiert werden, wie z.B. 2D- oder 3D-Pläne, sowie semantische Information, um dann automatisch den Navigationsgraphen zu erstellen. Folglich ist das vorgeschlagene Verfahren zeit- und kostensparend.

In einer vorteilhaften Ausführungsform kann ein BIM-Element eine NFC-Kennzeichnung ("Near Field Communication", kurz: NFC) aufweisen.

Ein BIM-Element weist insbesondere eine NFC-Kennzeichnung auf, wenn das entsprechende physische Element im Innenraum einen NFC-Tag hat. Die NFC-Kennzeichnung kann dann für den entsprechenden Knoten im Navigationsgraph gespeichert werden. Dies ermöglicht beispielsweise eine einfache Lokalisierung eines Nutzers anhand eines NFC-Tags am entsprechenden physischen Element im Innenraum.

In einer weiteren Ausführungsform kann das Selektionsmodul eingerichtet sein, das BIM-Element anhand der NFC-Kennzeichnung zu selektieren.

Vorzugsweise werden für die Generierung des Navigationsgraphen lediglich BIM-Elemente selektiert, die eine NFC-Kennzeichnung aufweisen. Dies erleichtert eine nachgelagerte Lokalisierung eines Nutzers.

In einer weiteren Ausführungsform kann das Selektionsmodul weiter eingerichtet sein, die BIM-Elemente mittels eines Optimierungsverfahrens zu selektieren.

Es ist denkbar, verschiedene Optimierungsstrategien zu nutzen, wie z.B. "Simulated Annealing". Das Ziel der Optimierung ist, BIM-Elemente mit einer hohen Aussagekraft zu selektieren. Vorzugsweise werden BIM-Elemente mit einer gleichmäßigen räumlichen Verteilung und einer maximalen vorgegebene Varianz in Elementtypen selektiert.

In einer weiteren Ausführungsform kann das Zuordnungsmodul weiter eingerichtet sein, weitere detaillierte BIM-Informationen und/oder die NFC-Kennzeichnung dem jeweiligen Graphknoten zuzuordnen.

Insbesondere können Informationen aus verschiedenen Ebenen des BIM-Modells ("low-level" bzw. "high-level information") genutzt werden, wie z.B. Eigenschaften der jeweiligen Elemente.

Gemäß einem zweiten Aspekt betrifft die Erfindung ein System zur Navigation in einem Innenraum umfassend eine wie oben beschriebene Vorrichtung und ein Navigationsgerät eines Nutzers, das mit dem Ausgabemodul gekoppelt ist.

Das Navigationsgerät kann beispielsweise ein mobiles Gerät, wie z.B. ein Smartphone, oder auch ein VR/AR-Gerät sein, das dazu geeignet ist, dem Nutzer auf Basis des Navigationsgraphen Navigationsdaten auszugeben.

In einer Ausführungsform des Systems kann das Navigationsgerät eingerichtet sein, sich mittels RFID ("Radio Frequency Identification") bei einem Element des Innenraums, dessen entsprechendes BIM-Element eine NFC-Kennzeichnung aufweist, zu registrieren und den Graphknoten, der diesem BIM-Element entspricht, als Startposition für die Navigation zu nutzen.

Dies erleichtert eine Lokalisierung eines Nutzers und anschließende Navigation im Innenraum.

In einer weiteren Ausführungsform des Systems kann das Navigationsgerät eingerichtet sein, bei Fortbewegung des Nutzers im Innenraum einen nächstgelegenen Graphknoten zu bestimmen, wobei der nächstgelegene Graphknoten anhand eines Vergleichs von Sensordaten eines mit dem Navigationsgerät gekoppelten Sensors im Innenraum mit den BIM-Informationen des zugeordneten BIM-Elements selektiert wird.

Hierbei kann beispielsweise auch die NFC-Kennzeichnung eines Elements im Innenraum genutzt werden.

Gemäß einem weiteren Aspekt betrifft die Erfindung ein computerimplementiertes Verfahren zur Generierung eines Navigationsgraphen zur Navigation in einem Innenraum, mit den Verfahrensschritten:
- Einlesen eines BIM-Modells für den Innenraum,
- Selektieren von BIM-Elementen aus dem BIM-Modell, wobei die selektierten BIM-Elemente eine hinreichend gleichmäßige, räumliche Verteilung und/oder mindestens eine vorgegebene Varianz in Elementtypen aufweisen,
- Extrahieren von absoluten Positionsinformationen für die selektierten BIM-Elemente aus dem BIM-Modell,
- Zuordnen jedes selektierten BIM-Elements zu jeweils einem Graphknoten,
- Generieren eines ungerichteten Navigationsgraphen aus den Graphknoten, wobei eine relative Position zwischen zwei Graphknoten aus jeweiligen absoluten Positionsinformationen der selektieren BIM-Elemente abgeleitet wird,
   und
- Bereitstellen des Navigationsgraphen zur Navigation im Innenraum.

Des Weiteren betrifft die Erfindung ein Computerprogrammprodukt, das direkt in einen programmierbaren Computer ladbar ist, umfassend Programmcodeteile, die bei der Ausführung des Programms durch einen Computer diesen veranlassen, die Schritte eines erfindungsgemäßen Verfahrens auszuführen.

Ein Computerprogrammprodukt kann beispielsweise auf einem Speichermedium, wie z.B. Speicherkarte, USB-Stick, CD-ROM, DVD, ein nichtflüchtiger/dauerhaftes Speichermedium (engl. Non-transitory storage Medium) oder auch in Form einer herunterladbaren Datei von einem Server in einem Netzwerk bereitgestellt oder geliefert werden.

Ausführungsbeispiele der erfindungsgemäßen Vorrichtung, Systems und Verfahrens sind in den Zeichnungen beispielhaft dargestellt und werden anhand der nachfolgenden Beschreibung näher erläutert. Es zeigen:
Fig. 1: ein Ausführungsbeispiel der erfindungsgemäßen Vorrichtung zur Generierung eines Navigationsgraphen zur Navigation in einem Innenraum sowie des erfindungsgemäßen Systems zur Navigation in einem Innenraum; und
Fig. 2: ein Ausführungsbeispiel des erfindungsgemäßen Verfahrens zur Generierung eines Navigationsgraphen zur Navigation in einem Innenraum.

Einander entsprechende Teile sind in allen Figuren mit den gleichen Bezugszeichen versehen.

Insbesondere zeigen die nachfolgenden Ausführungsbeispiele lediglich beispielhafte Realisierungsmöglichkeiten, wie insbesondere solche Realisierungen der erfindungsgemäßen Lehre aussehen könnten, da es unmöglich und auch für das Verständnis der Erfindung nicht zielführend oder notwendig ist, all diese Realisierungsmöglichkeiten zu benennen.

Auch sind insbesondere einem (einschlägigen) Fachmann in Kenntnis des/der Verfahrensanspruchs/Verfahrensansprüche alle im Stand der Technik üblichen Möglichkeiten zur Realisierung der Erfindung selbstverständlich bekannt, sodass es insbesondere einer eigenständigen Offenbarung in der Beschreibung nicht bedarf.

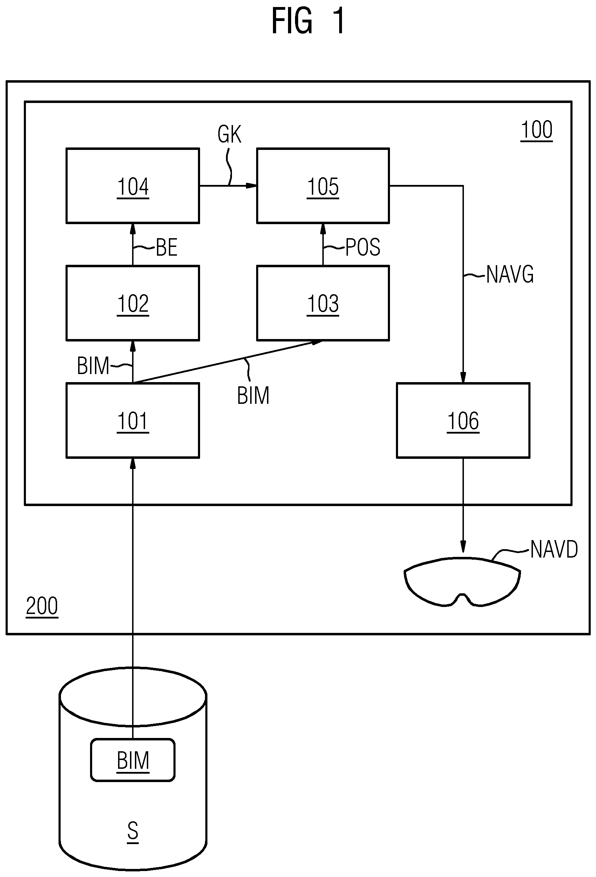

Figur 1 zeigt ein Ausführungsbeispiel einer erfindungsgemäßen Vorrichtung 100 zur Generierung eines Navigationsgraphen zur Navigation in einem Innenraum. Außerdem ist ein Ausführungsbeispiel des erfindungsgemäßen Systems 200 zur Navigation in einem Innenraum gezeigt. Das System 200 umfasst die Vorrichtung 100 sowie ein Navigationsgerät NAVD eines Nutzers. Ein Innenraum kann beispielsweise ein Gebäude, wie z.B. Fabrikhalle, oder zumindest ein Raum in einem Gebäude sein.

Die Vorrichtung 100 umfasst eine erste Schnittstelle 101, ein Selektionsmodul 102, ein Extraktionsmodul 103, ein Zuordnungsmodul 104, einen Generator 105 und ein Ausgabemodul 106. Die Vorrichtung 100 kann weiter mindestens einen Prozessor umfassen. Die Vorrichtung 100 kann mit eine Speichereinheit S gekoppelt sein.

Die Vorrichtung 100 ist geeignet, anhand eines BIM-Modells BIM des Innenraums einen Navigationsgraphen NAVG zu erstellen, der an das Navigationsgerät NAVD für eine Navigation im Innenraum übermittelt werden kann.

Die erste Schnittstelle 101 ist derart eingerichtet, ein BIM-Modell BIM für den Innenraum einzulesen. Das BIM-Modell BIM kann insbesondere auf der Speichereinheit S gespeichert sein. Das BIM-Modell BIM umfasst eine Vielzahl von Informationen, wie z.B. Position, semantische Klasse, Farbe, etc., über Elemente des Innenraums, wie z.B. Türen, Wände, Gegenstände etc.. Diese Informationen bzw. Eigenschaften der jeweiligen BIM-Elemente können im BIM-Modell BIM hierarchisch strukturiert sein, d.h., es liegen Informationen auf verschiedenen Ebenen/Informationsebenen vor. Jedes BIM-Element weist mindestens einen Elementtyp, der das entsprechende physische Element beschreibt, wie z.B. "Wand", "Tür", etc., sowie eine Positionsinformation auf.

Beispielsweise kann ein BIM-Element einen Feuerlöscher, der an einer bestimmten Position im Innenraum platziert ist, repräsentieren, wobei weiter beispielsweise auch eine Farbinformation des Feuerlöschers gespeichert sein kann.

Das Selektionsmodul 102 ist derart eingerichtet, anhand des BIM-Modells bestimmte BIM-Elemente BE zu selektieren. Dabei werden lediglich diejenigen BIM-Elemente selektiert, die eine hinreichend gleichmäßige, räumliche Verteilung und/oder mindestens eine vorgegebene Varianz in Elementtypen aufweisen. Beispielsweise kann für die räumliche Verteilung vorgegeben sein, dass BIM-Elemente einen Mindestabstand aufweisen müssen. Alternativ kann eine räumliche Gleichverteilung angestrebt werden. Außerdem kann vorgegeben sein, dass BIM-Elemente mit möglichst unterschiedlichen Elementtypen selektiert werden. Diese Auswahlkriterien ermöglichen, BIM-Elemente BE mit einer hohen Unterscheidungskraft auszuwählen.

Die resultierende Auswahl ergibt vorzugsweise eine Sammlung unterschiedlicher und aussagekräftiger BIM-Elemente mit geringer Mehrdeutigkeit. Es wird somit insbesondere vermieden, zwei BIM-Elemente auszuwählen, die einen geringen Abstand zueinander und/oder denselben Elementtyp aufweisen. Jedes selektierte BIM-Element BE und seine zugeordneten Eigenschaften werden anschließend einem Navigationsknoten GK zugeordnet.

Ein Element im Innenraum kann mittels RFID lokalisiert werden, d.h. es weist einen NFC-Tag auf. Das entsprechende BIM-Element weist dann eine NFC-Kennzeichnung auf. Vorzugsweise ist das Selektionsmodul derart eingerichtet, BIM-Elemente für den Navigationsgraphen zu selektieren, die eine solche NFC-Kennzeichnung aufweisen.

Das Selektionsmodul 102 kann außerdem weiter eingerichtet sein, ein Optimierungsverfahren, wie z.B. Simulated Annealing, für die Selektion der BIM-Elemente zu nutzen.

Das Positionsmodul 103 ist dazu eingerichtet, absolute Positionsinformationen POS, die im BIM-Modell BIM zum Beispiel als 2D-Grundriss gespeichert sind, für die selektierten BIM-Elemente BE zu extrahieren. Beispielsweise können absolute Positionsinformationen POS auch aus den semantischen Eigenschaften extrahiert werden.

Das Zuordnungsmodul 104 ist dazu eingerichtet, jedes selektierte BIM-Element BE einem Graphknoten GK zuzuordnen. Außerdem können weitere Informationen, sowie eine Kennzeichnung dem Graphknoten GK zugeordnet und anschließend im Navigationsgraphen NAVG gespeichert werden.

Damit repräsentiert jeder Graphknoten GK einen relevanten Punkt (engl. "point of interest") bzw. Element des Innenraums. Die Informationen, die jedem Navigationsknoten zugeordnet sind, werden aus den BIM-Informationen für den jeweiligen Punkt/das jeweilige Element abgeleitet. Der Informationsumfang, der im BIM-Modell gespeichert ist, kann variieren. Vorzugsweise wird einem Graphknoten mindestens der Elementtyp und eine 2D-Position aus einem 2D-Grundriss des relevanten Punktes/des Elements zugeordnet. Um einem Graphknoten weitere Informationen oder Merkmale, wie z.B. Farbe, zuordnen zu können, können beispielswiese Platzhalter definiert werden.

Alle selektierten BIM-Elemente und deren Merkmale, wie z.B. Position, NFC-Kennzeichnung, Geometrie, semantische Klasse und/oder Farbe, sowie ihre Zuordnung zu Graphknoten können beispielsweise als Liste oder Tabelle ausgegeben werden.

Der Generator 105 ist dazu eingerichtet, einen ungerichteten Navigationsgraphen NAVG aus den Graphknoten GK zu generieren, wobei relative Positionen zwischen den Graphknoten aus den absoluten Positionen POS der selektierten BIM-Elemente BE abgeleitet werden.

Das Ausgabemodul 106 ist dazu eingerichtet, den Navigationsgraphen zur Navigation im Innenraum einem Nutzer bereitzustellen. Das Ausgabemodul 106 ist mit dem Navigationsgerät NAVD gekoppelt.

Das Navigationsgerät NAVD kann so eingerichtet sein, dass sich ein Nutzer des Navigationsgeräts NAVD mittels RFID bei einem Element des Innenraums, dessen entsprechendes BIM-Element eine NFC-Kennzeichnung aufweist, registrieren kann und das Navigationsgerät NAVD somit den Graphknoten, der diesem BIM-Element entspricht, als Startposition für die Navigation nutzt.

Insbesondere kann der Navigationsgraph NAVG vorab, z.B. offline, generiert werden, um beispielsweise die Rechenzeit während der Navigation zu verkürzen. Die Nutzung des Navigationsgraphen NAVG für eine initiale Lokalisierung des Nutzers erfolgt dann online. Dazu kann ein Nutzer beispielsweise einen NFC-Tag an einem Element des Innenraums scannen. Da der NFC-Tag im Offline-Schritt mit einem Navigationsknoten verknüpft wurde, kann anhand des Navigationsgraphen NAVG die Position des Nutzers bestimmt werden. Der übereinstimmende Graphknoten dient als Startposition für die Navigation. Der Nutzer kann einen Zielknoten/eine Zielposition vorgeben. Anschließend kann der optimale Pfad vom Startknoten zum Zielknoten anhand des Navigationsgraphen und mittels des Dijkstra-Algorithmus zur Bestimmung des kürzesten Pfades bestimmt werden. Wenn zwei oder mehr Pfade gleicher Länge gefunden werden, kann beispielsweise derjenige Pfad mit der höchsten Anzahl von Knoten mit NFC-Kennzeichnung ausgewählt werden. Dies erleichtert später eine erneute Lokalisierung des Nutzers.

Sobald der Nutzer sich zum Zielknoten bewegt, kann über das Navigationsgerät NAVD Feedback gegeben werden. Dies kann beispielsweise durch eine Bewegung des Nutzers ausgelöst und bis zur Erreichung des Zielknotens iterativ durchgeführt werden. Dazu ist eine erneute Lokalisierung des Nutzers nötig, um die Position des Nutzers dem nächstgelegenen Graphknoten zuzuordnen. Beispielsweise erfolgt dies über einen Abgleich der BIM-Merkmale eines Graphknoten mit Sensordaten, wie z.B. Kameradaten, aus dem Innenraum. Zum Beispiel kann das Navigationsgerät NAVD eine Kamera umfassen und aktuelle Bilddaten der aktuellen Position des Nutzers erfassen. Diese Bilddaten können mit den BIM-Merkmalen der Graphknoten abgeglichen werden, um den übereinstimmenden Graphknoten zu ermitteln. Vorzugsweise erfolgt ein solcher Abgleich lediglich für die Graphknoten innerhalb eines vorgegeben Radius um einen zuvor bestimmten Graphknoten. Der ermittelte Graphknoten wird dem Navigationsgerät NAVD übermittelt und die Navigation kann daraufhin aktualisiert werden. Der Nutzer kann beispielsweise über das Navigationsgerät NAVD ein Navigationsfeedback, wie z.B. eine Richtungsanzeige, erhalten.

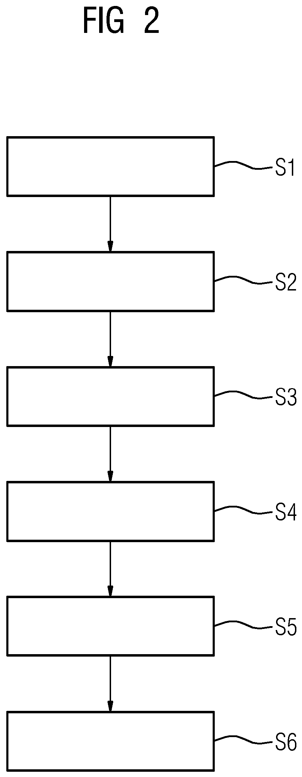

Figur 2 zeigt ein Ausführungsbeispiel des erfindungsgemäßen computerimplementierten Verfahrens zur Generierung eines Navigationsgraphen zur Navigation in einem Innenraum.

Das Verfahren umfasst folgende Verfahrensschritte:
In einem ersten Schritt S1 wird ein BIM-Modell des Innenraums eingelesen. Das BIM-Modell umfasst in der Regel einen Grundriss des Innenraums sowie BIM-Elemente für entsprechende physische Elemente des Innenraums, wie z.B. Türen, Wände, Gegenstände, etc.. Jedem BIM-Element sind entsprechende Eigenschaften bzw. Merkmale zugeordnet.

Im nächsten Schritt S2 werden BIM-Elemente aus dem BIM-Modell selektiert. Dies erfolgt vorzugsweise mittels eines Optimierungsverfahrens. Es werden BIM-Elemente selektiert, die eine hinreichend gleichmäßige Verteilung und/oder mindestens eine vorgegebene Varianz in Elementtypen aufweisen.

Im nächsten Schritt S3 werden für diese selektierten BIM-Elemente aus dem BIM-Modell absolute Positionsinformationen extrahiert. Beispielsweise werden die absoluten Positionsinformationen aus einem 2D- oder 3D-Plan des Innenraums extrahiert.

Im nächsten Schritt S4 werden die selektierten BIM-Elemente jeweils einem Graphknoten zugeordnet. Dabei werden die Eigenschaften jedes BIM-Elements, wie z.B. Position, Geometrie, Farbe, Klasse und/oder NFC-Kennzeichnung, dem jeweiligen Graphknoten zugeordnet. Beispielsweise können diese Informationen in einer Datenstruktur, z.B. Tabelle, gespeichert werden.

Im nächsten Schritt S5 wird ein ungerichteter Navigationsgraph aus den Graphknoten erstellt. Dabei werden relative Positionen zwischen den Graphknoten anhand der vorab ermittelten absoluten Positionsinformationen der BIM-Elemente bestimmt und im Navigationsgraphen gespeichert.

Anschließend wird im Schritt S6 der Navigationsgraph zur Navigation im Innenraum an ein Navigationsgerät ausgegeben.

Alle beschriebenen und/oder gezeichneten Merkmale können im Rahmen der Erfindung vorteilhaft miteinander kombiniert werden. Die Erfindung ist nicht auf die beschriebenen Ausführungsbeispiele beschränkt.

## Patentansprüche

1. Vorrichtung (100) zur Generierung eines Navigationsgraphen zur Navigation in einem Innenraum, umfassend:
• eine erste Schnittstelle (101), die derart eingerichtet ist, ein BIM-Modell (BIM) für den Innenraum einzulesen,
• ein Selektionsmodul (102), das derart eingerichtet ist, BIM-Elemente (BE) aus dem BIM-Modell zu selektieren, wobei die selektierten BIM-Elemente (BE) eine hinreichend gleichmäßige, räumliche Verteilung und/oder mindestens eine vorgegebene Varianz in Elementtypen aufweisen,
• ein Extraktionsmodul (103), das derart eingerichtet ist, absolute Positionsinformationen (POS) für die selektierten BIM-Elemente (BE) aus dem BIM-Modell zu extrahieren,
• ein Zuordnungsmodul (104), das derart eingerichtet ist, jedes selektierte BIM-Element jeweils einem Graphknoten (GK) zuzuordnen,
• einen Generator (105), der derart eingerichtet ist, einen ungerichteten Navigationsgraphen (NAVG) aus den Graphknoten (GK) zu generieren, wobei eine relative Position zwischen zwei Graphknoten aus jeweiligen absoluten Positionsinformationen (POS) der selektieren BIM-Elemente abgeleitet wird,
und
• ein Ausgabemodul (106), das derart eingerichtet ist, den Navigationsgraphen (NAVG) zur Navigation im Innenraum bereitzustellen.

2. Vorrichtung nach Anspruch 1, wobei ein BIM-Element (BE) eine NFC-Kennzeichnung aufweist.

3. Vorrichtung nach einem der vorhergehenden Ansprüche, wobei das Selektionsmodul (102) eingerichtet ist, das BIM-Element (BE) anhand der NFC-Kennzeichnung zu selektieren.

4. Vorrichtung nach einem der vorhergehenden Ansprüche, wobei das Selektionsmodul (102) weiter eingerichtet ist, die BIM-Elemente mittels eines Optimierungsverfahrens zu selektieren.

5. Vorrichtung nach einem der vorhergehenden Ansprüche, wobei das Zuordnungsmodul (104) weiter eingerichtet ist, weitere detaillierte BIM-Informationen und/oder die NFC-Kennzeichnung dem jeweiligen Graphknoten (GK) zuzuordnen.

6. System (200) zur Navigation in einem Innenraum umfassend eine Vorrichtung nach einem der Ansprüche 1 bis 5 und ein Navigationsgerät (NAVD) eines Nutzers, das mit dem Ausgabemodul (106) gekoppelt ist.

7. System (200) nach Anspruch 6, wobei das Navigationsgerät (NAVD) eingerichtet ist, sich mittels RFID bei einem Element des Innenraums, dessen entsprechendes BIM-Element eine NFC-Kennzeichnung aufweist, zu registrieren und den Graphknoten, der diesem BIM-Element entspricht, als Startposition für die Navigation zu nutzen.

8. System (200) nach Anspruch 6 oder 7, wobei das Navigationsgerät (NAVD) eingerichtet ist, bei Fortbewegung des Nutzers im Innenraum einen nächstgelegenen Graphknoten zu bestimmen, wobei der nächstgelegene Graphknoten anhand eines Vergleichs von Sensordaten eines mit dem Navigationsgerät gekoppelten Sensors im Innenraum mit den BIM-Informationen des zugeordneten BIM-Elements selektiert wird.

9. Computerimplementiertes Verfahren zur Generierung eines Navigationsgraphen zur Navigation in einem Innenraum, mit den Verfahrensschritten:
• Einlesen (S1) eines BIM-Modells für den Innenraum,
• Selektieren (S2) von BIM-Elementen aus dem BIM-Modell, wobei die selektierten BIM-Elemente eine hinreichend gleichmäßige, räumliche Verteilung und/oder mindestens eine vorgegebene Varianz in Elementtypen aufweisen,
• Extrahieren (S3) von absoluten Positionsinformationen für die selektierten BIM-Elemente aus dem BIM-Modell,
• Zuordnen (S4) jedes selektierten BIM-Elements zu jeweils einem Graphknoten,
• Generieren (S5) eines ungerichteten Navigationsgraphen aus den Graphknoten, wobei eine relative Position zwischen zwei Graphknoten aus jeweiligen absoluten Positionsinformationen der selektieren BIM-Elemente abgeleitet wird,
• und
• Bereitstellen (S6) des Navigationsgraphen zur Navigation im Innenraum.

10. Computerprogrammprodukt, das direkt in einen programmierbaren Computer ladbar ist, umfassend Programmcodeteile, die dazu geeignet sind, die Schritte des Verfahrens nach Anspruch 9 durchzuführen.
